# EUROPEAN PATENT SPECIFICATION

(11) **EP 3 059 382 B1**
(45) Date of publication and mention of the grant of the patent: **11.10.2017**
(21) Application number: 15155729.5
(22) Date of filing: 19.02.2015
(51) Int. Cl.: E21B 7/02, B66C 13/12, F16L 3/015, H02G 11/00

(54) **A MINING BOOM AND METHOD OF SUPPORTING HOSES**
BERGBAUAUSLEGER UND VERFAHREN ZUR UNTERSTÜTZUNG VON SCHLÄUCHEN
FLÈCHE D'EXPLOITATION MINIÈRE ET PROCÉDÉ PERMETTANT DE SUPPORTER DES TUYAUX

(43) Date of publication of application: 24.08.2016
(73) Proprietor: Sandvik Mining and Construction Oy, 33330 Tampere (FI)
(72) Inventor: PAUKKUNEN, Hannu, 33330 Tampere (FI); ANTTONEN, Pekka, 33330 Tampere (FI); VERHO, Samuli, 33330 Tampere (FI)

(56) References cited:
- EP-A2- 1 083 030
- DE-A1- 10 245 984
- "single-boom drill jumbo dh DF1", , 1 July 2014 (2014-07-01), pages 1-1, XP055207811, Retrieved from the Internet: URL:http://www.dhms.com/fileadmin/user_upl oad/products/dh_DF1/DF1_Startseite.jpg [retrieved on 2015-08-14]
- "Rail-bound drill jumbo dh BTS1", , 1 July 2014 (2014-07-01), pages 1-1, XP055207814, Retrieved from the Internet: URL:http://www.dhms.com/fileadmin/user_upl oad/products/dh_BTS1/BTS1_Startseite.jpg [retrieved on 2015-08-14]

## Description

### Background of the invention

The invention relates to a mining boom, which comprises a non-rotating boom unit, a rotating boom unit provided with a mine work unit and a rotating device between the boom units. The rotating device serves as a rotating joint and allows turning of the rotating boom unit around rotation axis of the rotating device and in relation to the non-rotating unit of the boom. The rotating device comprises a frame, a rotary actuator and rotation axis parallel with longitudinal axis of the non-rotating boom unit. The mining boom further comprises a hose assembly comprising one or more hoses. The hose assembly is supported to the boom and extends to the mine work unit over the rotating joint. In order to support the hose assembly at the rotating joint the boom is also equipped with a hose support.

The invention further relates to a method of supporting hoses to a boom of a mine vehicle.

The field of the invention is defined more specifically in the preambles of the independent claims.

In mines and at other work sites, rock drilling rigs provided with drilling booms are used for drilling bore holes into rock surfaces and soil. The drilling boom is provided with a rock drilling unit, which typically comprises a feed beam and a rock drilling machine arranged movably on it. The rock drilling machine comprises hydraulic actuators such as a rotating device and a percussion device. Hydraulic power is conveyed to the hydraulic actuators by means of hydraulic hoses, which are supported by means of hose supports. However, it has been noted that the present support means are not sufficient and have some defects, especially when the drilling boom comprises a rotating joint.

### Brief description of the invention

An object of the invention is to provide a novel and improved mining boom. A further object is to provide a novel and improved method for supporting hoses to a boom.

The mining boom according to the invention is characterized in that the support frame of the hose support comprises at least one curved guide surface being located around the rotation axis of the rotating joint; and the hose support comprises at least one slide element connecting the support element and the guide surface and allowing relative movement between the support element and the guide surface in response to rotation of the rotating joint of the boom.

The method according to the invention is characterized by supporting the hose assembly at the rotating joint by means of a slide element to a curved guide surface which is located around rotation axis of the rotating joint; and turning the guide surface together with the mine work unit around the rotation axis and allowing relative movement between the slide element and the guide surface, thereby preventing the rotary movement from having effect on the hose assembly.

An idea of the disclosed solution is that a hose assembly is supported over a rotating joint of a mining boom by means of a hose support, which comprises one or more curved guide surfaces. The guide surface may surround rotation axis of the rotating joint and one or more slide elements are supported movably to the guide surface. The hose assembly is connected to the slide element by means of one or more support elements. When the rotating joint is rotated, one or more rotatable portions belonging to the mining boom arrangement are rotated in relation to the rotation axis. Because of the rotation, relative movement occurs between the support element and the guide surface. The slide element may slide, roll, or move in any other way, along the curved guide surface.

An advantage of the disclosed solution is that the hose assembly may pass the rotating joint of the mining boom in a controlled manner and without a need to reserve a great amount of extra length of hoses for allowing rotation of the rotating device. Thus, the lengths of the hoses or hose-like objects belonging to the hose assembly may be decreased. Thanks to the shorter hoses, weight of the hose assembly and the entire mining boom may be decreased. The shorter hoses are naturally also less expensive than longer hoses. Further, when the hose assembly is properly supported and when shorter hoses may be used then visibility to the operating area is improved. Operation in narrow places is also facilitated. Furthermore, the shorter hoses are less vulnerable to damages. Long hoses have a tendency of to stick to other booms or surrounding objects and this can also be avoided when utilizing the present solution.

According to an embodiment, the rotating boom unit is composed of one mine work unit and the non-rotating boom unit is composed of one or more boom parts connected to each other and to a carrier of a rock drilling rig. Thus, the rotating boom unit is without boom parts. In other words, the mine work unit is located at a distal first end portion of the boom. The rotating device is located between the mine work unit and the boom. This also means that the rotating device is located at the distal end portion of the boom. The rotation axis of the rotating device is parallel with length axis of the distal end portion of the boom, whereby the rotating device provides a rotating joint for turning the mine work unit around the rotation axis and relative to the boom.

According to an embodiment, the rotating boom unit comprises one mine work unit and one boom part. The non-rotating boom unit comprises one or more boom parts connected to each other and to a carrier of a rock drilling rig. Thus, in this embodiment the rotating device is not located between the mine work unit and the outermost end of boom. The rotation axis of the rotating device is parallel with longitudinal axis of distal end portion of the non-rotating boom unit. The rotating device provides a rotating joint for turning the mine work unit and the outermost boom part around the rotation axis and relative to the non-rotating boom parts. The boom part of the rotating boom unit may comprise one or more boom parts or components connected to each other by means of angular or linear joints.

According to an embodiment, the hose assembly comprises one or more hoses known also as flexible tubes. Inside the hose or flexible tube may be a longitudinal hollow space for conducting pressure fluid, or alternatively, the inner space may be provided with conducting means. Thus, the hose or hose-like object may be a hydraulic or pneumatic hose serving as a flow path for pressure energy, or alternatively, the hose may be a flexible current conductor or flexible signal conductor for transmitting electrical energy or data signals. Further, the inner space of the hose or flexible tube may be provided with optical fibres, whereby the hose may serve as an optical fibre conductor. The hose comprises an outer casing and the inner space may be hollow or filled with electrically or optically conductive material. The hose assembly may comprise one or more hydraulic and/or pneumatic hoses and/or one or more other hoses, such as electric cables. Thus, in this patent application the hose may, in addition to conventional fluid hoses, mean other elongated flexible components leading from a carrier of a mining vehicle to a mining unit and being supported to the mining boom.

According to an embodiment, the hose support comprises a curved guide surface, which is located around the rotating device at a radial distance from an outer surface of the frame of the rotating device. Thus, there is gap between the guide surface and the outer surface of the rotating device. An advantage of this embodiment is that design of the guide surface is not dependent on the shape and design of the rotating device.

According to an embodiment, the hose support comprises a curved guide surface, which is located around the rotating device at a radial distance from an outer surface of the frame of the rotating device and is a component separate from the rotating device. An advantage of this embodiment is that design of the guide surface is not dependent on the shape and design of the rotating device. Further, in this embodiment conventional rotating devices may be used since the hose support does not necessary cause any structural modifications to the rotating device.

According to an embodiment, the rotating device comprises a stator part and a rotor part. The hose support comprises a curved guide surface being connected to the rotor part. When the rotating device is operated, the guide surface connected to the rotor rotates relative to the slide element and the hose assembly of the hose support. Thus, the guide surface may move and the other parts of the hose support may stay stationary during the operation of the rotating device. The guide surface may be part of the rotor part, or it may be connected to the rotor part by means of one or more mounting component.

According to an embodiment, the support frame of the hose support may comprise a bow member which may form the needed curved guide surface for the hose support system. The bow member is provided with a bow line being transverse relative to the rotation axis of the rotating joint. Then outer surfaces of the bow member serve as the curved guide surfaces. Further, the bow member is configured to surround the rotating device totally or at least partly. The slide element is connected to the bow member. The slide element may comprise an eye member through which the bow member may pass. Thus, there is sliding engagement between the bow member and the eye member. The disclosed combination of the bow and eye members is simple, durable and withstands well impurities and external forces.

According to an embodiment, the hose support comprises at least one bow member which may form the desired curved guide surface for the hose support system. The bow member has a shape of an incomplete circle, whereby the bow member is provided with a cut portion and comprises two extreme ends defining the cut portion. The bow member may be fastened to the rotor part of the rotating device at the two end portions of the bow member. Free ends of the bow may be provided with threads for screw mounting, or alternatively, the bow ends may be fastened by welding or utilizing particular mounting elements.

According to an embodiment, the hose support comprises at least one bow member which may form the desired curved guide surface for the hose support system. The bow member may be U -shaped.

According to an embodiment, the hose support comprises at least one bow member which may form the desired curved guide surface for the hose support system. The bow member has a shape of a circle or ring. The ring shaped bow member may surround the rotation axis and the rotating device. The bow member may be fastened to the rotor part of the rotating device.

According to an embodiment, the hose support comprises at least one bow member which may form the desired curved guide surface for the hose support system. The bow member has a shape of a loop. Thus, the bow may be circular or oval, for example.

According to an embodiment, the hose support comprises at least one bow member which may form the desired curved guide surface for the hose support system. The bow member is a rigid object. The rigid bow member tolerates impacts and is not sensitive for harsh environment conditions. The bow member may is some cases also serve as a protective element around the rotating device. The bow member may be fastened by means of fast coupling elements whereby it is readily mountable and dismountable, if need be.

According to an embodiment, the hose support comprises at least one bow member which may form the desired curved guide surface for the hose support system. The bow member may be a rigid object and it may be formed of at least one bended bar or tube. The bar or tube may have a round cross section. Manufacture of the rigid bow member by a bending process into a desired bow shape is relatively simple and fast. The bow member may be made of metal material, such as steel or aluminum alloy.

According to an embodiment, the hose support comprises at least one bow member which may form the desired curved guide surface for the hose support system. The bow member may be formed of a wire rope, whereby the original shape of the bow member is recoverable changeable, thereby allowing the shape of the bow member to be changed under influence of external force and to take the original shape after termination of the force. Alternatively, the bow member may be made of flexible tube, which may of plastic material, for example. Further alternatives for the above mentioned flexible bow members may be a strap, rope, cable or chain, such as a roller chain.

According to an embodiment, the hose support comprises at least one bow member which may form the desired curved guide surface for the hose support system. The hose support further comprises a slide element by means of which a support element connected to a hose assembly is coupled to the bow member. The slide element may a shackle. Alternatively the slide element may be a spring hook or carbine hook. Advantages of the mentioned slide elements are that they all are inexpensive, simple and durable components. One further possibility is to use a chain loop or corresponding loop-shaped coupling element as the slide element.

According to an embodiment, the bow member is turned relative to the eye member, which is kept substantially stationary by means of the gravity. The eye member and the hose assembly hung below the boom and may remain their position despite of the rotation of the rotating unit of the boom.

According to an embodiment, the support frame of the hose support comprises one or more stopper elements for limiting the movement of the slide element along the guide surface. Then the slide element has a limited operational length of movement path and angular range. An advantage of this embodiment is that the movement range of the slide element and the hose assembly supported to the slide element may be easily limited for avoiding undesired relative positions between the hose assembly and the boom structure. An additional advantage is that the stopper element may be arranged to transmit forces to the support element connected to the hose assembly in extreme rotational positions of the rotating boom unit thereby preventing the rotating boom unit to push the hose assembly directly. In other words, no deforming forces are directed to the hose assembly and the support element since in extreme angular rotation situations the rotating boom unit does not collide with them. Thus, harmful loadings subjected to the hose assembly may be avoided. The stopper elements may be adjustable, whereby they can be positioned to desired positions. The stopper elements may be provided with fastenings screws or corresponding elements for locking them into desired positions. Alternatively, the stopper elements may be mounted to fixed positions during the manufacture or assembly of the hose support system. The stopper elements may also serve as fastening elements of the curved support surface.

According to an embodiment, the mining boom has an upper surface, a lower surface and two opposite flank surfaces. The lower surface side of the boom is provided with support means for supporting the hose assembly. The hose assembly is hung below the boom under influence of gravity. Center line of the hose assembly is parallel with the rotation axis at the rotating joint, whereby the hose assembly is led straight or substantially straight over the rotating joint at least in operational middle position between extreme rotating positions of the rotating joint. In other words, the hose assembly is supported at the rotating joint without bending center line of the hose assembly, whereby the hose assembly may has as straight configuration over the rotating joint as possible. Thanks to this embodiment, the hose assembly is below the mining boom and does not hamper visibility of the operated target. Furthermore, length of the one or more hose of the hose assembly may be shorter since extra length reserved for the rotation movement may be relatively short.

According to an embodiment, the support element of the hose support is a band or collar surrounding and combining the one or more hoses or flexible tubes of the hose assembly.

According to an embodiment, the mining boom is a rock drilling boom connectable to a rock drilling rig. The rock drilling boom is provided with a feed beam and a rock drilling machine supported movably to the feed beam. Thus, the drilling boom is intended for drilling blasting and/or reinforcing holes to a rock material.

According to an embodiment, the rotating device is surrounded by one or more protective elements. The protective elements may be bended rigid bars or tubes, for example. The protective elements may provide protection not only for the rotating device but also for hose support system and especially for the guide surface and the slide element. The protective element may be arranged at a front end side of the rotating device whereby it may protect the structure from falling rock blocks. Furthermore, the protective elements may serve as bumpers preventing damages caused by collisions of the mining boom against rock surfaces when positioning the boom in difficult operating situations. When the curved support surface comprises a bow member or other type curved element separate from the rotating device, the protective element and the curved support surface may be an integrated unit comprising at least a shared fastening element.

According to an embodiment, the rotating device comprises a stator part and a rotor part arranged consecutively on the rotation axis of the rotating joint. The stator part may be mounted at a distal end section of the mining boom and the rotor part may be mounted to the mine work unit, but other mounting ways may also be implemented. The rotating device comprises a rotary actuator, which is a pressure medium operated motor arranged to turn the rotor part around the rotation axis relative to the stator part. Alternatively, the rotary actuator may be an electric motor or actuator, for example.

According to an embodiment, the engagement between the guide surface and the slide element of the hose support is configured to limit movement of the support element in axial direction of the rotation joint. A clamp or other binding element is arranged around the hose assembly and may be supported to curved support surface so that axial movement of the clamp is limited when the mine work unit is positioned vertically or substantially vertically.

According to an embodiment, the disclosed hose support arrangement is configured to support a hose assembly comprising one or more hoses or flexible tubes intended for conveying fluid inside the hoses. The fluid may be pressurized hydraulic fluid, pressurized air or lubricating fluid, for example. Thanks to the use of the disclosed hose support system, shorter hoses may be used in the hose assembly, whereby pressure losses may be minor compared to pressure losses caused by longer hoses.

According to an embodiment, the hose support arrangement is configured to support a hose assembly comprising several hoses or flexible tubes intended for conveying fluid inside the hoses. Thus, the hose assembly may comprise one or more hydraulic hoses and one or more flushing medium hoses. The mining boom may be provided with pressure medium operated rock drilling machine. Drilling cuttings may be flushed by means of pressurized flushing fluid. Further, the hose assembly may also comprise one or more data cable and/or current conductor for transmitting data from sensing devices and for powering electronically operable actuators arranged on the mining boom. The rock drilling machine may alternatively be electrically operable, whereby needed electric power has to be provided for the rotating boom unit.

According to an embodiment, the hose support system is utilized in a pressure medium system for supporting one or more working pressure hoses. The working pressure hoses are utilized for transferring needed working energy and force to a pressure medium actuator.

According to an embodiment, the hose support system is utilized in a hydraulic system for supporting a hose assembly comprising one single hose-like object. However, inside an outer sleeve or cover of the one single hose-like object may one or more fluid paths or one or more cables or combination of one or more fluid paths and cables. Thus, inside the hose-like object may be one or more fluid paths having ring shaped cross section.

According to an embodiment, the disclosed hose support arrangement is configured to support a hose assembly comprising one or more flexible electric conductor or cable intended for powering an electrically operable mine work unit. The cable can also be considered to be a kind of hose or hose-like object, which needs to be supported to the boom structure and needs to be passed over the rotating joint. In addition to the one or more current cable the hose assembly may comprise one or more data transmission cable and/or one or more pressure fluid hoses.

According to an embodiment, the slide member of the hose support comprises one or more rollers, or corresponding roller bearing elements, arranged in contact with the curved guide surface of the hose support.

According to an embodiment, the rotating device is separate from the hose support. The rotating device may be without physical contact with the hose support means. Thus, the rotating device and the hose support arrangement may be separate devices whereby they both may be designed independently. However, the rotating device and the hose support system may be mounted to a shared mounting stand.

According to an embodiment, the rotating device and the hose support are independent devices. However, the support frame of the hose support may be fastened to the structure of the rotating device. The support frame may be mounted by means of screws to an end cover of the rotating device, for example.

According to an embodiment, the rotating device comprises a stator, a rotor and a rotary actuator for turning the rotor in relation to the stator. The rotor comprises an end surface facing away from the stator and the end surface is provided with a position measuring device thereby forming an outermost part of the rotor. Thus, the distal end surface of the rotor of the rotating device is without any additional device other than the mentioned position measuring device. Thanks to the disclosed hose support arrangement the end of the rotor may be reserved for the position measuring sensor or device and no complicated other measuring arrangements needs to be arranged.

According to an embodiment, the hose support comprises at least one rail serving as the guide surface. The rail may be bent to a desired arc or loop. The slide element of the hose support is connected movably to the curved rail. Between the curved rail and the slide element may be slide surfaces or other bearing surfaces. Cross-sectional shape of the rail may be designed so that a proper support can be provided for the slide element.

According to an embodiment, the rotating device comprises a round or curved outer surface and the guide surface of the hose support is a rail connected on an outer rim of the rotating device. Alternatively, a curved rail may be arranged around the rotating device at a distance from the outer surface of the rotating device, whereby the shape of the outer surface of the rotating device may be as desired. The slide element of the hose support comprises slide surfaces or rollers supported against the rail.

According to an embodiment, the rotating device comprises a round or curved outer surface and is provided with one or more grooves on an outer rim. The slide element of the hose support comprises a protruding slide part arranged in the groove. Connection between the groove and the slide part may be provided with shape locking surfaces thereby preventing detaching of the components in radial direction of the rotation axis of the rotating device. However, the connection allows relative movement between the groove and the slide element along the circumferential groove serving as the guide surface. Thus, also in this embodiment the relative movement between the slide element and the groove serving as the guide surface around the rotation axis is allowed when the rotating device is rotated.

According to an embodiment, the boom is intended to be used in a rock drilling rig designed for face drilling, whereby the boom has a primary operational position wherein the boom and the drilling unit are substantially horizontally. However, the face drilling boom may also be provided with a bolting or fan drilling feature, whereby at least the distal section of the boom may be turned upwards or side wards in order to drill holes in a fan-like pattern.

According to an embodiment, the boom is intended to be used in a rock drilling rig designed specifically for production drilling, whereby the boom may be utilized when drilling blast holes of a fan-like drilling pattern.

According to an embodiment, the boom is intended to be used in a rock drilling rig designed especially for drilling drill holes for reinforcing elements or material, such as for reinforcing rock bolts. The reinforcing holes may be drilled according to a fan-like drilling pattern.

According to an embodiment, the boom is intended to be used in a rock drilling rig designed for surface drilling, whereby the boom has a primary operational position wherein the boom is substantially horizontally and the drilling unit is substantially vertically.

According to an embodiment, the hose assembly may comprise one or more flexible tubes or cables which may be combined together by means of spiral binding, wrapping or shrink wrapping. Thanks to the binding of the hoses and cables the hose assembly takes less space and visibility to the operated area is improved.

According to an embodiment, the hose assembly is provided with a center line. Further, the hose support is configured to prevent the center line of the hose assembly to cross the rotation axis of the rotating joint. An advantage of this solution is that the hoses, cables and other flexible elongated objects belonging to the hose assembly are prevented from bending to harmful positions. Thereby damages to the hoses may be avoided and the service life may be longer.

In addition to the above disclosed mining boom this patent application discloses an arrangement for supporting a hose assembly at a rotating joint. The arrangement comprises: at least one hose support for supporting the hose assembly and comprising at least one support element connected to the hose assembly and at least one support frame for supporting the support element; and wherein the support frame comprises at least one curved guide surface; and the hose support further comprises at least one slide element connecting the support element and the guide surface and allowing relative movement between the support element_and the guide surface. The more detailed structure of the hose support may comprise the features which are disclosed above in relation to the mining boom.

Further, this patent application may relate to a rotating device or rotating device arrangement, which comprises the above disclosed hose support. The rotating device and the hose support may be mounted together or they may be separate units, which are arranged to co-operate. It is possible to fasten a curved guide surface or element to mounting elements of the rotating device. It is also possible to integrate the curved guide surface or element to be a fixed part of the rotating device.

The above-disclosed embodiments can be combined to form desired solutions provided with necessary features disclosed.

### Brief description of the figures

Some embodiments are described in more detail in the accompanying drawings, in which
Figure 1 is a schematic side view of a rock drilling rig provided with several booms,
Figure 2 is a sectional view of a hose assembly comprising several hoses or cables and being coupled to a hose support for supporting the hose assembly at a rotating joint of a boom arrangement,
Figures 3 is a sectional view of a hose support comprising a shackle, which serves as a slide element,
Figures 4 is a sectional view of a hose support comprising a loop, which serves as a slide element,
Figures 5a - 5d are schematic views of a hose support arrangement seen in direction of rotational axis of a rotating joint, and in the Figures a rotating joint is being positioned in different angular positions in relation to the rotational axis,
Figures 6a and 6b are schematic side views of a hose support arrangement in two angular positions, and wherein a hose assembly is fastened to a rotating boom unit by means of a fixed fastening element,
Figures 7a and 7b are schematic side views of a hose support arrangement in two angular positions, and wherein a hose assembly is fastened to a rotating boom unit by means of a curved support surface and a slide element, and
Figure 8 is a schematic side view of a hose support arrangement arranged in connection with a double rotating joint.

For the sake of clarity, the Figures show some embodiments of the disclosed solution in a simplified manner. In the Figures, like reference numerals identify like elements.

### Detailed description of some embodiments

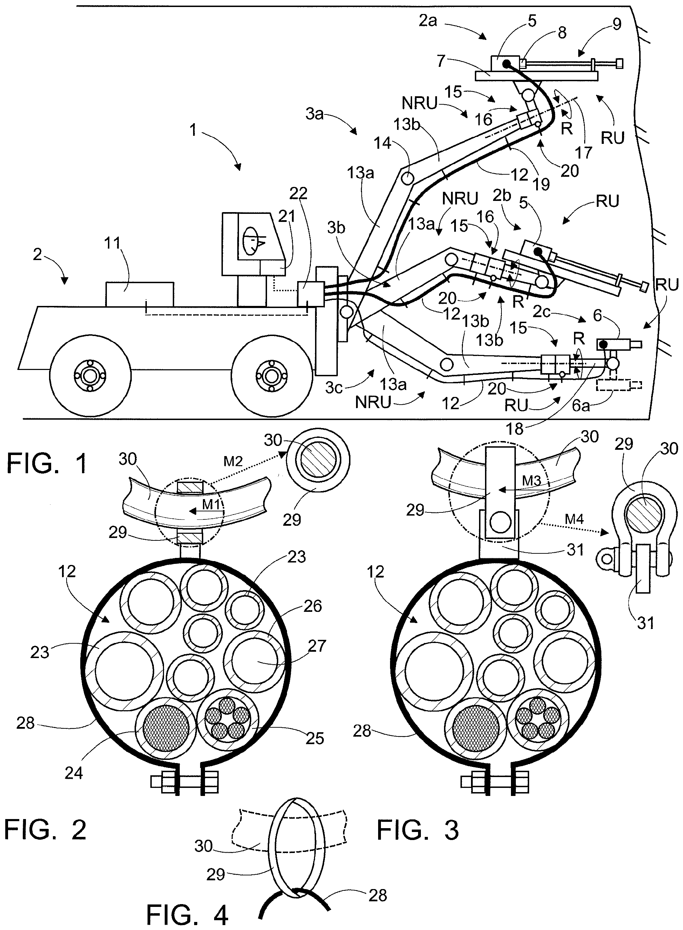

Figure 1 shows a mine vehicle 1 comprising several mine work units 2a - 2c, which are connected by means of mining booms 3a - 3c to a movable carrier 4. In Figure 1 the mine vehicle 1 comprises three mine work units 2 and booms 3, but the number of them may greater or minor. The mine vehicle 1 may be a rock drilling rig comprising one or more drilling booms 3a, 3b provided with rock drilling units comprising rock drilling machines 5, and one or more booms 3c provided with other mine work units. An example of another type of mine work unit may be a reinforcing device 6 by means of which reinforcing bolts or material may be mounted or injected for supporting rock surfaces. Yet another example of a mine work unit may be a measuring unit.

The drilling unit may comprise a feed beam 7 which provides support for the rock drilling machine 5. The rock drilling machine 5 may be moved on the feed beam 7 by means of a feed device. The rock drilling machine 5 may comprise a shank 8 at a front end of the rock drilling machine 5 for connecting a drilling tool 9. The tool 9 may comprise one or more drill rods and a drill bit located at a distal end of the tool 9. The rock drilling machine 5 further comprises a rotating device for rotating the shank 8 and the tool 9. When the rock drilling is based on rotation and feed of the tool 9, then the drilling is known as rotary drilling. However, the rock drilling machine 5 may also comprise an impact device or percussion device for generating impact pulses to the tool 9. At a drilling site, one or more drill holes are drilled with the drilling unit. The drill holes may be blast holes or reinforcing holes.

The rock drilling machine 5 may comprise one or more hydraulic actuators. The percussion device and the rotation device may be hydraulic actuators as well as the feed device. Hydraulic power may be generated in a hydraulic pumping unit 11 or pressure source, which may be located on the carrier 4. The hydraulic power may be transmitted by means of one or more hydraulic hoses to the mine work unit 2. The hydraulic hoses and other flexible tubes and cables may be combined by means of binding spiral or corresponding element to form a hose assembly 12. The hose assembly 12 may comprise one single hose or cable, or alternatively it may comprise a plurality of similar or different elongated flexible elements, which are called as hoses in this patent application.

The mining boom 3 may comprise one or more boom sections or parts 13a, 13b. A first boom part 13a is connected to the carrier 2 and the distal second boom part 13b may be provided with the mine work unit 2. Between the boom parts 13a, 13b may be joints 14 for allowing the boom 3 to be moved in a versatile manner. The mining boom 3 may also comprise a rotating joint 15, which is located between a non-rotating boom unit NRU and a rotating boom unit RU. The rotating joint 15 comprises a rotating device 16 for turning the rotating boom unit RU in relation to rotation axis 17. In the mining boom 3a the rotating joint 15 is located between the mine work unit 2a and the distal end portion of the second boom part 13b. Thereby the mine work unit 2a is the rotating boom unit RU of the mining boom 3a. In the mining boom 3b the rotating joint 15 is located at the second boom part 13b so that the rotating boom unit RU comprises not only the mine work unit 2b but also the outermost portion of the second boom part 13b. In the third mining boom 3c the rotating joint 15 is located at the outermost end of the second boom part 13b and the rotating boom unit RU comprises an auxiliary boom part 18 and the mine work unit 2c. Turning or rotation of the rotating boom unit RU is indicated by arrows R. In Figure 1 rotating boom unit RU of the third mining boom 3b is shown by broken lines in a rotated position.

The hose assembly 12 may be supported to the boom 3 by means of suitable supporting means, such as hose fasteners 19. The hose assembly 12 may be supported below the boom 3 so that it hangs below the lower surface of the boom under influence of the gravity. It should be noted that the hose assembly 12 may alternatively be supported to a top surface or side surfaces of the boom. The hose assembly 12 is also led over the rotating joint 15 and is supported to the rotating boom unit RU by means of the hose support 20 disclosed in this patent application.

Figure 1 further discloses that the hose assembly 12 of boom 3c may comprise one or more electric cable for transmitting control signals or measuring data between the mine work unit 2 and a control unit 21 of the mine vehicle 1. The fluid hoses, electric cables and other hoses may be connected to a connection box 22.

Figure 2 shows a hose assembly 12 comprising several hoses 23, electric cables 24, data transmission cables 25 or other hose-like objects. The hose-like objects comprise an outer sleeve or cover 26 and an inner space 27, which may be void and serve as a flow path for pressurized fluid, or alternatively electrically or optically conductive material may be placed inside the cover whereby the hose-like object may transmit electric power or data.

The hose assembly 12 may be surrounded by a support element 28 belonging to a hose support 20. The support element 28 may be a clamp and it may be connected to a slide element 29 in order to couple the support element 28 to a support frame, which may be a bow member 30. The slide element 29 comprises an eye member through which the bow member 30 or corresponding curved support surface or element may be arranged. Between the bow member 30 and the eye member of the slide element 29 is sliding connection, whereby the bow member 30 may move freely in relation to the slide element 29. Thus, the slide element 29 and the hose assembly 12 may remain stationary during the rotation of the rotating boom unit.

Further, the coupling of the slide element 29 and the bow member 30 is disclosed in Figure 2 also as being seen from direction M1 and this detail is indicated in Figure 2 by means of an arrow M2. In Figure 3 the detail of the coupling in direction M3 is indicated by means of an arrow M4.

Figure 3 differs from the solution of Figure 2 in that the slide element 29 is a shackle which may be fastened to a flange 31 of the support element 28. The shackle also comprises an eye member for providing sliding connection to a bow member 30 or other curved or bended support bar.

Figure 4 differs from the solutions of Figures 2 and 3 in that the slide element 29 is a separate loop-shaped component.

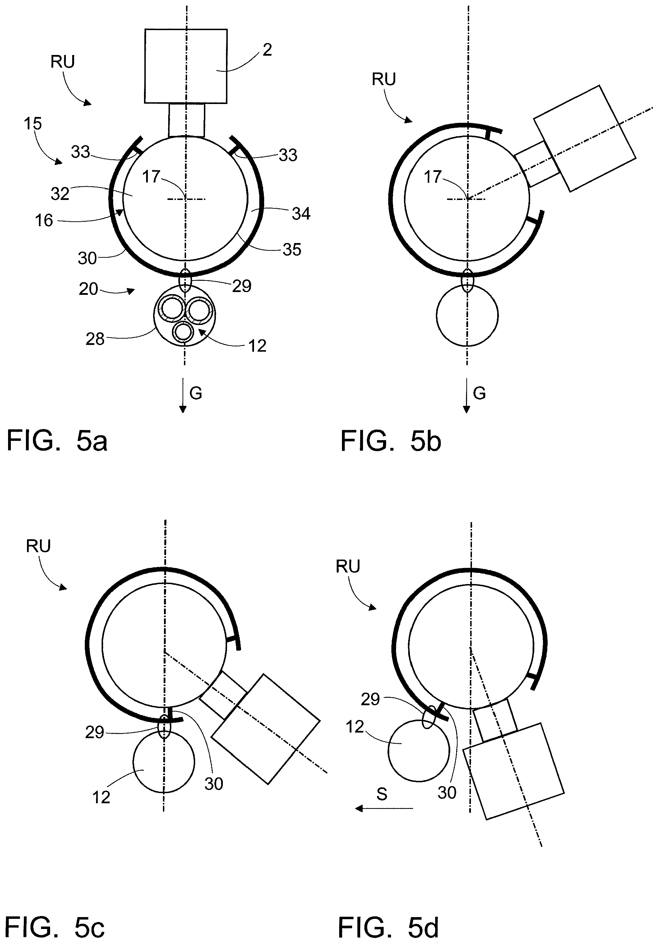

Figures 5a - 5d disclose a hose support 20 or a hose support arrangement seen in direction of rotational axis 17 of a rotating joint 15. In Figure 5a a rotating boom unit RU is in a centre position and in Figures 5b - 5d it is turned around the rotational axis 17 to different angular positions. The rotating boom unit RU may comprise a rotor part 32 of a rotating device 16 and a mine work device 2. A curved support surface 33 of a hose support 20 may be fastened to the rotor part 32 by means of fastening elements 33. The support surface 33 may be a bended bow member 30 and a sliding element 29 may slide along the curved surface of the bow member 30. Alternatively, the slide element 29 may comprise rolling elements, whereby a rolling bearing is formed between the bow member 30 and the sliding element 29. The fastening elements 33 may also serve as stoppers or limiting elements and may thus limit movement range of the sliding element 29. The bow member 30 may have shape of an incomplete circle and it may be located at a distance 34 from the outer surface 35 of the rotor part 32. In alternative solution the outer surface 35 of the rotor part 32 may be provided with one or more grooves serving as the curved support surface, or one or more rails or other suitable curved support surfaces may be mounted on the outer surface 35.

The hose assembly 12 is influenced by the gravity G. The rotating boom unit RU may turn relative to the rotation axis, whereas the hose assembly 12 may be stationary during the operation of the rotating device 16. As can be seen, an end surface of the rotor part 32 may be without any devices or means relating to the hose support system.

In Figure 5c the rotating boom unit RU is turned so that the stopper 33 is in contact with the slide element 29 of the hose support 20. When the rotating boom unit RU is turned further on, then the stopper 33 may push the hose assembly 12 sideways S, as it is demonstrated in Figure 5d. This may be advantageous when operating near ground level.

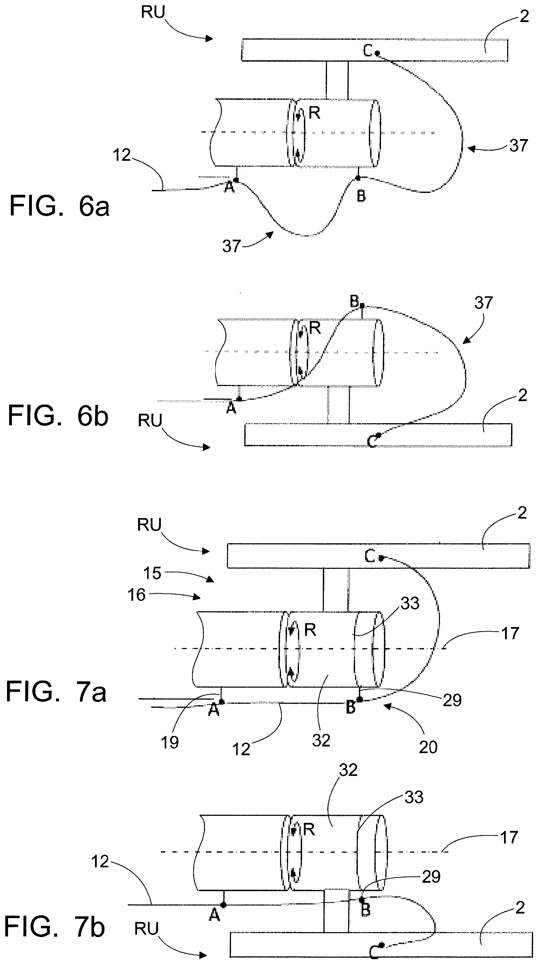

Figures 6a and 6b illustrate a hose support arrangement wherein a hose assembly 12 is fastened to a rotating boom unit RU by means of a fixed fastening element 36. Then length of the hose assembly 12 must be dimensioned so that turning of the rotating joint 15 is possible. The hose assembly needs to be provided with extra length whereby large hose loops 37 are formed.

Figures 7a and 7b show a hose support arrangement according to the present invention. As can be noted, no large hose loops are needed, thanks to a curved support surface 33 coupled to a rotor part 32 of the rotating device 16, and to a sliding element 29 arranged movably to the support surface 33. The support surface 33 is located around rotational axis 17 of a rotating joint 15. Figures 7a and 7b further show that the hose assembly 12 may be led over the rotating joint 15 in a substantially straight form.

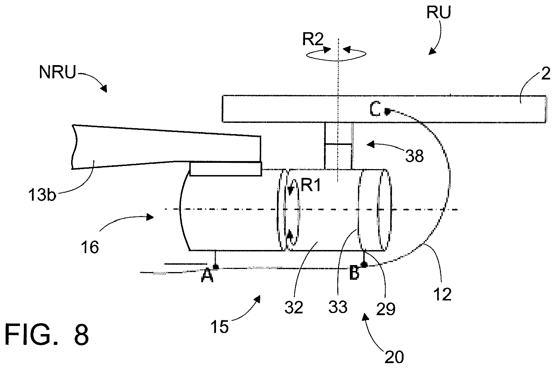

Figure 8 is a schematic side view of a hose support arrangement arranged in connection with a double rotating joint comprising a first rotating joint 15 and a second rotating joint 38. In connection with the first rotating joint may be a hose support arrangement 20 disclosed above in this patent application.

The drawings and the related description are only intended to illustrate the idea of the invention. In its details, the invention may vary within the scope of the claims.

## Claims

1. A mining boom (3) comprising:
a non-rotating boom unit (NRU) having longitudinal axis;
a rotating boom unit (RU) comprising at least one mine work unit (2);
at least one rotating device (16) between the boom units and comprising a frame, a rotary actuator and rotation axis parallel with longitudinal axis of the non-rotating boom unit, whereby the rotating device (16) provides a rotating joint (15) for turning (R) the rotating boom unit (RU) around the rotation axis (17) and relative to a non-rotating unit (NRU) of the boom (3);
at least one hose assembly (12) comprising at least one hose (23, 24, 25), and wherein the hose assembly (12) is supported to the boom (3) and extends to the mine work unit (2) over the rotating joint (15); and
at least one hose support (20) for supporting the hose assembly (12) at the rotating joint (15) and comprising at least one support element (28) connected to the hose assembly (12) and at least one support frame for supporting the support element (28) to the rotating boom unit (RU);
**characterized in that**
the support frame of the hose support (20) comprises at least one curved guide surface being located around the rotation axis (17) of the rotating joint (15); and
the hose support (20) comprises at least one slide element (29) connecting the support element (28) and the guide surface and allowing relative movement between the support element (28) and the guide surface in response to rotation (R) of the rotating joint (15) of the boom (3).

2. The boom as claimed in claim 1, **characterized in that**
the guide surface is located around the rotating device (16) at a radial distance (34) from an outer surface (35) of the frame of the rotating device (16).

3. The boom as claimed in claim 1 or 2, **characterized in that**
the rotating device (16) comprises a stator part and a rotor part (32); and
the guide surface is connected to the rotor part (32) and is arranged to be rotated (R) relative to the slide element (29) and the hose assembly (20) during operation of the rotating device (16).

4. The boom as claimed in any one of the preceding claims 1 to 3, **characterized in that**
the support frame comprises a bow member (30) provided with a bow line being transverse relative to the rotation axis (17) and outer surfaces of which bow member (30) serve as the curved guide surfaces;
the bow member (30) is arranged to surround the rotating device (16) at least partly; and
the slide element (29) comprises an eye member through which the bow member (30) passes thereby providing sliding engagement between the bow member (30) and the eye member.

5. The boom as claimed in claim 4, **characterized in that**
the bow member (30) has a shape of an incomplete circle, whereby the bow member (30) is provided with a cut portion and comprises two extreme ends defining the cut portion; and
the bow member (30) is fastened to the rotor part (32) of the rotating device (16) at the two end portions of the bow member (30).

6. The boom as claimed in claims 4 or 5, **characterized in that**
the bow member (30) is U -shaped.

7. The boom as claimed in any one of the preceding claims 4 - 6, **characterized in that**
the bow member (30) is a rigid object.

8. The boom as claimed in claim 7, **characterized in that**
the bow member (30) is formed of at least one bended bar made of metal material; and
the bar has round cross section.

9. The boom as claimed in any one of the preceding claims 4 - 6, **characterized in that**
the bow member (30) is formed of wire rope, whereby the original shape of the bow member (30) is recoverable changeable, thereby allowing the shape of the bow member (30) to be changed under influence of external force and to take the original shape after termination of the force.

10. The boom as claimed in any one of the preceding claims 4 - 9, **characterized in that**
the slide element (29) is a shackle.

11. The boom as claimed in any one of the preceding claims 1 - 10, **characterized in that**
the support frame comprises at least one stopper element (33) for limiting the movement of the slide element (29) along the guide surface, whereby the slide element (29) has a limited operational length of movement path and angular range.

12. The boom as claimed in any one of the preceding claims 1 - 11, **characterized in that**
the boom (3) has an upper surface, lower surface and two opposite flank surfaces;
the lower surface side of the boom (3) is provided with support means (19, 20) for supporting the hose assembly (12);
the hose assembly (12) is hung below the boom (3) under influence of the gravity (G); and
center line of the hose assembly (12) is parallel with the rotation axis (17) at the rotating joint (15), whereby the hose assembly (12) is led straight or substantially straight over the rotating joint (15) at least in operational middle position between extreme rotating positions of the rotating joint (15).

13. The boom as claimed in any one of the preceding claims 1 - 12, **characterized in that**
the support element (28) is a band or collar surrounding and combining the one or more hoses (23) or flexible tubes (24, 25) of the hose assembly (12).

14. The boom as claimed in any one of the preceding claims 1 - 13, **characterized in that**
the boom (3) is a rock drilling boom connectable to a rock drilling rig (1); and
the mine work unit (2) of the rock drilling boom (3) comprises at least a feed beam (7) and a rock drilling machine (5) supported movably to the feed beam (7).

15. A method of supporting hoses to a boom of a mine vehicle,
wherein the boom (3) comprises a mine work unit (2) at a distal end portion of the boom (3) and a rotating device (16) provided with a rotating joint (15) being located between the mine work unit (2) and the end portion of the boom (3);
and the method comprises:
supporting a hose assembly (12) comprising at least one hose (24, 25, 26) to the boom (3) and conducting pressurized fluid through the hose assembly (12) to the mine work unit (2) over the rotating joint (15);
**characterized by**
supporting the hose assembly (12) at the rotating joint (15) by means of a slide element (29) to a curved guide surface which is located around rotation axis (17) of the rotating joint (15); and
turning the guide surface together with the mine work unit (2) around the rotation axis (17) and allowing relative movement between the slide element (29) and the guide surface, thereby preventing the rotary movement (R) from having effect on the hose assembly (12).

## Patentansprüche

1. Bergbauausleger (3), umfassend:
eine nichtrotierende Auslegereinheit (NRU), die eine Längsachse aufweist;
eine rotierende Auslegereinheit (RU), die mindestens eine Bergbaueinheit (2) umfasst;
mindestens eine rotierende Vorrichtung (16) zwischen den Auslegereinheiten und umfassend einen Rahmen, einen Rotieraktuator und eine Rotationsachse parallel zu einer Längsachse der nichtrotierenden Auslegereinheit, wodurch die rotierende Vorrichtung (16) ein rotierendes Gelenk (15) zum Drehen (R) der rotierenden Auslegereinheit (RU) um die Rotationsachse (17) und relativ zu einer nichtrotierenden Einheit (NRU) des Auslegers (3) bereitstellt;
mindestens eine Schlauchanordnung (12), die mindestens einen Schlauch (23, 24, 25) umfasst, und wobei die Schlauchanordnung (12) an dem Ausleger (3) unterstützt ist und sich über das rotierende Gelenk (15) zu der Bergbaueinheit (2) erstreckt; und
mindestens eine Schlauchunterstützung (20) zum Unterstützen der Schlauchanordnung (12) an dem rotierenden Gelenk (15) und umfassend mindestens ein mit der Schlauchanordnung (12) verbundenes Stützelement (28) und mindestens einen Stützrahmen zum Unterstützen des Stützelements (28) an der rotierenden Auslegereinheit (RU);
**dadurch gekennzeichnet, dass**
der Stützrahmen der Schlauchunterstützung (20) mindestens eine gekrümmte Führungsfläche umfasst, die sich um die Rotationsachse (17) des rotierenden Gelenks (15) herum befindet; und
die Schlauchunterstützung (20) mindestens ein das Stützelement (28) und die Führungsfläche verbindendes Gleitelement (29) umfasst, das relative Bewegungen zwischen dem Stützelement (28) und der Führungsfläche in Reaktion auf eine Rotation (R) des rotierenden Gelenks (15) des Auslegers (3) zulässt.

2. Ausleger wie in Anspruch 1 beansprucht, **dadurch gekennzeichnet, dass** die Führungsfläche sich um die die rotierende Vorrichtung (16) herum in einem radialen Abstand (34) von einer äußeren Fläche (35) des Rahmens der rotierenden Vorrichtung (16) befindet.

3. Ausleger wie in Anspruch 1 oder 2 beansprucht, **dadurch gekennzeichnet, dass**
die rotierende Vorrichtung (16) ein Statorteil und ein Rotorteil (32) umfasst;
die Führungsfläche mit dem Rotorteil (32) verbunden ist und angeordnet ist, um während des Betriebs der rotierenden Vorrichtung (16) relativ zu dem Gleitelement (29) und der Schlauchanordnung (20) rotiert (R) zu werden.

4. Ausleger wie in einem der vorstehenden Ansprüche 1 bis 3 beansprucht, **dadurch gekennzeichnet, dass**
der Stützrahmen ein Bogenglied (30) umfasst, das mit einer Bogenlinie versehen ist, die quer relativ zu der Rotationsachse (17) verläuft und äußere Flächen dieses Bogenglieds (30) als gekrümmte Führungsflächen dienen;
das Bogenglied (30) angeordnet ist, um die rotierende Vorrichtung (16) mindestens teilweise zu umgeben; und
das Gleitelement (29) ein Augenglied umfasst, durch welches das Bogenglied (30) verläuft und dabei einen gleitenden Eingriff zwischen dem Bogenglied (30) und dem Augenglied bereitstellt.

5. Ausleger wie in Anspruch 4 beansprucht, **dadurch gekennzeichnet, dass**
das Bogenglied (30) eine Form eines unvollständigen Kreises aufweist, wodurch das Bogenglied (30) mit einem ausgeschnittenen Bereich versehen ist und zwei extreme Enden aufweist, die den ausgeschnittenen Bereich definieren; und
das Bogenglied (30) an dem Rotorteil (32) der rotierenden Vorrichtung (16) an den zwei Endbereichen des Bogenglieds (30) festgemacht ist.

6. Ausleger wie in den Ansprüchen 4 oder 5 beansprucht, **dadurch gekennzeichnet, dass**
das Bogenglied (30) U-förmig ist.

7. Ausleger wie in einem der vorstehenden Ansprüche 4 - 6 beansprucht, **dadurch gekennzeichnet, dass**
das Bogenglied (30) ein starres Objekt ist.

8. Ausleger wie in Anspruch 7 beansprucht, **dadurch gekennzeichnet, dass**
das Bogenglied (30) aus mindestens einer aus einem Metallmaterial hergestellten gebogenen Stange gebildet ist; und
die Stange einen runden Querschnitt aufweist.

9. Ausleger wie in einem der vorstehenden Ansprüche 4 - 6 beansprucht, **dadurch gekennzeichnet, dass**
das Bogenglied (30) aus einem Drahtseil gebildet ist, wodurch die originale Form des Bogenglieds (30) wiederherstellbar veränderbar ist und es dadurch der Form des Bogenglieds (30) erlaubt, unter Einfluss externer Kraft verändert zu werden und nach Beendigung der Kraft die originale Form anzunehmen.

10. Ausleger wie in einem der vorstehenden Ansprüche 4 - 9 beansprucht, **dadurch gekennzeichnet, dass**
das Gleitelement (29) ein Schäkel ist.

11. Ausleger wie in einem der vorstehenden Ansprüche 1 - 10 beansprucht, **dadurch gekennzeichnet, dass**
das Stützrahmen mindestens ein Anschlagelement (33) zum Begrenzen der Bewegung des Gleitelements (29) entlang der Führungsfläche umfasst, wodurch das Gleitelement (29) eine/n begrenzte/n betriebliche/n Bewegungsweglänge und Winkelbereich aufweist.

12. Ausleger wie in einem der vorstehenden Ansprüche 1 - 11 beansprucht, **dadurch gekennzeichnet, dass**
der Ausleger (3) eine obere Fläche, untere Fläche und zwei gegenüberliegende Flankenflächen aufweist;
die unterflächige Seite des Auslegers (3) mit Stützmitteln (19, 20) zum Unterstützen der Schlauchanordnung (12) versehen ist;
die Schlauchanordnung (12) unter Einfluss der Schwerkraft (G) unterhalb des Auslegers (3) abgehangen ist; und
eine Mittellinie der Schlauchanordnung (12) parallel zu der Rotationsachse (17) des rotierenden Gelenks (15) ist, wodurch die Schlauchanordnung (12) mindestens in einer betrieblichen Mittelposition zwischen extremen Rotationspositionen des rotierenden Gelenks (15) gerade oder im Wesentlichen gerade über das rotierende Gelenk (15) geführt wird.

13. Ausleger wie in einem der vorstehenden Ansprüche 1 - 12 beansprucht, **dadurch gekennzeichnet, dass**
das Stützelement (28) ein Band oder Kragen ist, der die einen oder mehreren Schläuche (23) oder flexible Röhren (24, 25) der Schlauchanordnung (12) umgibt und kombiniert.

14. Ausleger wie in einem der vorstehenden Ansprüche 1 - 13 beansprucht, **dadurch gekennzeichnet, dass**
der Ausleger (3) ein Gesteinsbohrausleger ist, der mit einer Gesteinsbohranlage (1) verbindbar ist; und
die Bergbaueinheit (2) des Gesteinsbohrauslegers (3) mindestens einen Zuführbalken (7) und eine Gesteinsbohrmaschine (5), die bewegbar an dem Zuführbalken (7) unterstützt ist, umfasst.

15. Verfahren zum Unterstützen von Schläuchen an einem Ausleger eines Bergbaufahrzeugs,
wobei der Ausleger (3) eine Bergbaueinheit (2) an einem distalen Endbereich des Auslegers (3) und eine rotierende Vorrichtung (16) umfasst, die mit einem rotierenden Gelenk (15) versehen ist, das sich zwischen der Bergbaueinheit (2) und dem Endbereich des Auslegers (3) befindet;
und das Verfahren umfasst:
Unterstützen einer Schlauchanordnung (12), die mindestens einen Schlauch (24, 25, 26) umfasst, an dem Ausleger (3) und Leiten von druckbeaufschlagtem Fluid durch die Schlauchanordnung (12) über das rotierende Gelenk (15) zu der Bergbaueinheit (2);
**gekennzeichnet durch**
Unterstützen der Schlauchanordnung (12) an dem rotierenden Gelenk (15) mittels eines Gleitelements (29) an eine gekrümmte Führungsfläche, die sich um eine Rotationsachse (17) des rotierenden Gelenks (15) herum befindet; und
Drehen der Führungsfläche zusammen mit der Bergbaueinheit (2) um die Rotationsachse (17) und Zulassen von relativen Bewegungen zwischen dem Gleitelement (29) und der Führungsfläche, und dadurch Verhindern, dass die Rotierbewegung (R) die Schlauchanordnung (12) beeinflusst.

## Revendications

1. Flèche d'exploitation minière (3) comprenant :
une unité de flèche non rotative (NRU) présentant un axe longitudinal ;
une unité de flèche rotative (RU) comprenant au moins une unité de travail minier (2) ;
au moins un dispositif de rotation (16) entre les unités de flèche et comprenant un cadre, un actionneur rotatif et un axe de rotation parallèle à l'axe longitudinal de l'unité de flèche non rotative, selon laquelle le dispositif de rotation (16) fournit un joint rotatif (15) pour tourner (R) l'unité de flèche rotative (RU) autour de l'axe de rotation (17) et par rapport à une unité non rotative (NRU) de la flèche (3) ;
au moins un ensemble de tuyaux (12) comprenant au moins un tuyau (23, 24, 25) et dans lequel l'ensemble de tuyaux (12) est supporté sur la flèche (3) et s'étend jusqu'à l'unité de travail minier (2) par-dessus le joint rotatif (15) ; et
au moins un support de tuyau (20) pour supporter l'ensemble de tuyaux (12) sur le joint rotatif (15) et comprenant au moins un élément de support (28) raccordé à l'ensemble de tuyaux (12) et au moins un cadre de support pour supporter l'élément de support (28) sur l'unité de flèche rotative (RU) ;
**caractérisée en ce que**
le cadre de support du support de tuyau (20) comprend au moins une surface de guidage courbée étant située autour de l'axe de rotation (17) du joint rotatif (15) ; et
le support de tuyau (20) comprend au moins un élément coulissant (29) raccordant l'élément de support (28) et la surface de guidage et permettant le mouvement relatif entre l'élément de support (28) et la surface de guidage en réponse à la rotation (R) du joint rotatif (15) de la flèche (3).

2. Flèche selon la revendication 1, **caractérisée en ce que**
la surface de guidage est située autour du dispositif de rotation (16) à une distance radiale (34) d'une surface extérieure (35) du cadre du dispositif de rotation (16).

3. Flèche selon la revendication 1 ou 2, **caractérisée en ce que**
le dispositif de rotation (16) comprend une partie de stator et une partie de rotor (32) ; et
la surface de guidage est raccordée à la partie de rotor (32) et est agencée pour être tournée (R) par rapport à l'élément coulissant (29) et l'ensemble de tuyaux (20) pendant le fonctionnement du dispositif de rotation (16).

4. Flèche selon l'une quelconque des revendications précédentes 1 à 3, **caractérisée en ce que**
le cadre de support comprend un élément de cintre (30) doté d'une ligne d'élément de cintre étant transversale par rapport à l'axe de rotation (17) et des surfaces extérieures duquel élément de cintre (30) servent de surfaces de guidage courbées;
l'élément de cintre (30) est agencé pour entourer le dispositif de rotation (16) au moins partiellement ; et
l'élément coulissant (29) comprend un élément d'oeillet au travers duquel l'élément de cintre (30) passe, fournissant ainsi une mise en prise coulissante entre l'élément de cintre (30) et l'élément d'oeillet.

5. Flèche selon la revendication 4, **caractérisée en ce que**
l'élément de cintre (30) a une forme de cercle incomplet, selon laquelle l'élément de cintre (30) est doté d'une partie coupée et comprend deux extrémités extrêmes définissant la partie coupée ; et
l'élément de cintre (30) est fixé à la partie de rotor (32) du dispositif de rotation (16) sur les deux parties d'extrémité de l'élément de cintre (30).

6. Flèche selon la revendication 4 ou 5, **caractérisée en ce que**
l'élément de cintre (30) est en forme de U.

7. Flèche selon l'une quelconque des revendications précédentes 4 à 6, **caractérisée en ce que**
l'élément de cintre (30) est un objet rigide.

8. Flèche selon la revendication 7, **caractérisée en ce que**
l'élément de cintre (30) est formé d'au moins une barre pliée faite en un matériau métallique ; et
la barre a une section transversale ronde.

9. Flèche selon l'une quelconque des revendications précédentes 4 à 6, **caractérisée en ce que**
l'élément de cintre (30) est formé d'un câble métallique, selon laquelle la forme originale de l'élément de cintre (30) est récupérable, changeable, en permettant ainsi à la forme de l'élément de cintre (30) d'être changée sous l'influence d'une force externe et de prendre la forme d'origine après la fin de la force.

10. Flèche selon l'une quelconque des revendications précédentes 4 à 9, **caractérisée en ce que**
l'élément coulissant (29) est une éclisse.

11. Flèche selon l'une quelconque des revendications précédentes 1 à 10, **caractérisée en ce que**
le cadre de support comprend au moins un élément de butée (33) pour limiter le mouvement de l'élément coulissant (29) le long de la surface de guidage, selon laquelle l'élément coulissant (29) a une longueur opérationnelle limitée de voie de mouvement et plage angulaire.

12. Flèche selon l'une quelconque des revendications précédentes 1 à 11, **caractérisée en ce que**
la flèche (3) a une surface supérieure, une surface inférieure et deux surfaces de flanc opposées ;
le côté de surface inférieure de la flèche (3) est doté de moyens de support (19, 20) pour supporter l'ensemble de tuyaux (12) ;
l'ensemble de tuyaux (12) est accroché sous la flèche (3) sous l'influence de la gravité (G) ; et
la ligne centrale de l'ensemble de tuyaux (12) est parallèle à l'axe de rotation (17) sur le joint rotatif (15), selon laquelle l'ensemble de tuyaux (12) est conduit tout droit ou sensiblement tout droit par-dessus le joint de rotation (15) au moins en position médiane opérationnelle entre des positions de rotation extrêmes du joint rotatif (15).

13. Flèche selon l'une quelconque des revendications précédentes 1 à 12, **caractérisée en ce que**
l'élément de support (28) est une bande ou un collier entourant et combinant l'un ou les plusieurs tuyaux (23) ou tubes flexibles (24, 25) de l'ensemble de tuyaux (12).

14. Flèche selon l'une quelconque des revendications précédentes 1 à 13, **caractérisée en ce que**
la flèche (3) est une flèche de forage pour roche raccordable à une plateforme de forage pour roche (1) ; et
l'unité de travail minier (2) de la flèche de forage pour roche (3) comprend au moins une poutre d'alimentation (7) et une machine de forage pour roche (5) supportée de manière mobile sur la poutre d'alimentation (7).

15. Procédé de support de tuyaux sur une flèche d'un véhicule minier,
dans lequel la flèche (3) comprend une unité de travail minier (2) sur une partie d'extrémité distale de la flèche (3) et un dispositif de rotation (16) doté d'un joint rotatif (15) étant situé entre l'unité de travail minier (2) et la partie d'extrémité de la flèche (3) ;
et le procédé comprend :
le support d'un ensemble de tuyaux (12) comprenant au moins un tuyau (24, 25, 26) sur la flèche (3) et la conduite de fluide pressurisé au travers de l'ensemble de tuyaux (12) jusqu'à l'unité de travail minier (2) par-dessus le joint rotatif (15) ;
**caractérisé par**
le support de l'ensemble de tuyaux (12) sur le joint rotatif (15) au moyen d'un élément coulissant (29) sur une surface de guidage courbée qui est située autour de l'axe de rotation (17) du joint rotatif (15) ; et
la rotation de la surface de guidage conjointement avec l'unité de travail minier (2) autour de l'axe de rotation (17) et le fait de permettre un mouvement rotatif entre l'élément coulissant (29) et la surface de guidage, en empêchant ainsi le mouvement rotatif (R) d'avoir un effet sur l'ensemble de tuyaux (12).
